# EUROPÄISCHE PATENTSCHRIFT

(11) **EP 2 282 860 B1**
(45) Veröffentlichungstag und Bekanntmachung des Hinweises auf die Patenterteilung: **31.07.2013**
(21) Anmeldenummer: 09745448.2
(22) Anmeldetag: 12.05.2009
(51) Int. Cl.: B23B 51/02, B24B 19/04

(54) **MEHRSCHNEIDIGES VOLLHARTMETALL-BOHRWERKZEUG**
MULTI-BLADE SOLID CARBIDE DRILL
FORET EN MÉTAL DUR PLEIN À PLUSIEURS TRANCHANTS

(30) Priorität: 16.05.2008 DE 102008023856
(43) Veröffentlichungstag der Anmeldung: 16.02.2011
(73) Patentinhaber: Gühring OHG, 72458 Albstadt (DE)
(72) Erfinder: VON PUTTKAMER, Ingo, 72469 Messstetten (DE); HELBIG, Armin, 72459 Albstadt (DE); TRAUNER, Karl, 72511 Bingen (DE)
(74) Vertreter: Meitinger, Thomas Heinz
(86) Internationale Anmeldenummer: PCT/DE2009/000653
(87) Internationale Veröffentlichungsnummer: WO 2009/138064

(56) Entgegenhaltungen:
- EP-A- 1 632 301
- DE-A1- 2 851 183
- DE-A1- 3 624 617
- US-A- 5 678 960

## Beschreibung

Die Erfindung betrifft ein vorzugsweise mehrschneidiges Vollhartmetall- (VHM) Bohrwerkzeug zur Zerspanung von hochfesten Sandwich-Materialien, insbesondere zum Bohren ins Volle von derartigen Werkstoffen, gemäß dem Oberbegriff des Patentanspruchs 1.

Zum Einbringen von hoch genauen Bohrungen in Sandwich-Materialien, insbesondere von Verbundwerkstoffen, bei denen sich Werkstofflagen mit überwiegendem Anteil von CFK und/oder Aluminium mit Titanlagen bzw. titanhaltigen Schichten abwechseln, werden besonders standfeste und stabile Werkzeuge benötigt, die sich darüber hinaus dadurch auszeichnen müssen, dass die Schneiden dauerhaft in der Lage sind, den Verbundwerkstoff mit guter Oberflächengüte zu zerspanen, wobei über die gesamte Standzeit des Werkzeugs eine Delamination der Verbundschichten verhindert werden soll.

Zu diesem Zweck hat man bislang Sonderwerkzeuge entwickelt, beispielsweise ein Werkzeug, wie es im deutschen Gebrauchsmuster 20 211 592 beschrieben ist. Man hat auch bereits versucht, die Zerspanung mit Vollhartmetall-Bohrwerkzeugen gemäß dem Oberbegriff des Patentanspruchs 1 durchzuführen, um eine verbesserte Standzeit der Schneiden und - insbesondere bei tiefen Bohrungen - eine verbesserte Lagegenauigkeit der Bohrungen zu sichern. Diese Lagegenauigkeit und Oberflächengüte der Bohrungen ist insbesondere bei der Zerspanung von Verbundmaterialien erforderlich, die verstärkt im modernen Flugzeugbau Anwendung finden. Die einzelnen Materialschichten, die in unterschiedlichster Reihenfolge angeordnet sein können, verleihen den Materialien bei geringem Gewicht eine hohe Stabilität. Die in derartige Materialien einzubringenden Bohrungen werden häufig benötigt, um derartige Bauteile miteinander zu vernieten. Da hierbei häufig sensorgesteuerte Roboter im Einsatz sind, kommt es auf die Lagegenauigkeit derartiger Bohrungen in besonderem Maße an.

Das Dokument DE 28 51 183 A1 beschreibt einen Bohrer mit einem Vorsprung innerhalb einer Spannut. Das Dokument EP 1 632 301 A beschreibt einen Bohrer und ein Verfahren zur Herstellung desselben. Der Oberbegriff von Anspruch 1 basiert auf diesem Dokument.

Es hat sich gezeigt, dass mit gattungsgemäßen Vollhartmetall-Bohrwerkzeugen zwar eine ausreichende Stabilität des Werkzeugs und auch qualitativ hochwertige Schneiden bereitgestellt werden. Auf der anderen Seite hat sich aber herausgestellt, dass selbst Vollhartmetallwerkzeuge gängiger Bauart die geforderte Standzeit oftmals nicht erreichen, insbesondere dann nicht, wenn verhältnismäßig tiefe Bohrungen in Verbundwerkstoffe mit sich abwechselnden Schichten von Aluminium, faserverstärktem bzw. kohlefaserverstärktem Kunststoff und Titan eingebracht werden müssen.

Der Erfindung liegt deshalb die Aufgabe zugrunde, ein Bohrwerkzeug der eingangs beschriebenen Art in der Weise weiterzubilden, dass es bei verbesserter Standzeit in der Lage ist, in den eingangs beschriebenen kritischen Werkstoffen lagegenaue Bohrungen auch größerer Tiefe problemlos einzubringen. Ein weiterer Aspekt der Erfindung besteht in der Bereitstellung eines wirtschaftlichen Verfahrens zur Herstellung solcher Werkzeuge.

Diese Aufgabe wird hinsichtlich des Werkzeugs durch die Merkmale des Patentanspruchs 1 und hinsichtlich des Verfahrens durch den Anspruch 9 gelöst.

Erfindungsgemäß wurde erkannt, dass die Standzeit des Werkzeugs ganz wesentlich angehoben werden kann, wenn der beim Bohren ins Volle entstehende Span im Nutgrund eine besonders starke Krümmung erfährt. Es hat sich bei langwierigen Versuchen gezeigt, dass diese starke Spankrümmung bei der Zerspanung von Verbundwerkstoffen der eingangs beschriebenen Art dazu führt, dass der Span frühzeitig bricht, so dass am Ausgang der Spanbildungszone im Wesentlichen Brökelspäne vorliegen, die sich selbst dann einfach aus der Spannut entfernen lassen, wenn Bohrungen mit großer Tiefe, beispielsweise größer als 10 x D₁ in den Werkstoff eingebracht werden. Ein Spanstau, wie er mit herkömmlichen Werkzeugen bei der Zerspanung dieser schwierig zu bearbeitenden Werkstoffe zu beobachten war, kann erfindungsgemäß wirksam vermieden werden, so dass auch ein plötzlicher Werkzeugbruch zuverlässig ausgeschlossen wird. Dabei ergibt sich der zusätzliche Vorteil, dass der im Wesentlichen wellenförmige, zwischen dem ersten und dem zweiten Spannutenabschnitt liegende Spannutensteg eine Vergrößerung des Flächenträgheitsmoments des Bohrerquerschnitts mit sich bringt und somit zur Erhöhung der Stabilität des Werkzeugs genutzt werden kann. Dies bedeutet gleichzeitig aber auch, dass der Kernquerschnitt des Bohrwerkzeugs in der Spanbildungszone weiter herabgesetzt werden kann, so dass trotz der vorgesehenen Spannutenstege ein großer Spanraum zur Verfügung gestellt werden kann. Der Abtransport der Spane kann durch die Verkürzung der Spanlänge insbesondere dann weiter verbessert werden, wenn das Werkzeug mit innenliegenden Kühl-/Schmiermittelkanälen ausgestattet ist. Die Verbesserung der Zerspanungseigenschaften ergibt sich gleichermaßen für gerade-und wendelgenutete Werkzeuge.

Das Vollhartmetall-Bohrwerkzeug kann dabei gemäß Anspruch 9 dennoch wirtschaftlich, d. h. mit vertretbarem Zeitaufwand, hergestellt werden. Die ersten und zweiten Spannutenabschnitte mit dazwischen liegendem Spannutensteg können dabei entweder im Rahmen einer Serienbearbeitung mit zwei oder mehr unterschiedlichen Profil-Schleifscheiben auf Endmaß in einen Hartmetall-Rohling eingeschliffen werden, oder aber - was Gegenstand des Anspruchs 10 ist - mittels einer einzigen Profil-Schleifscheibe hergestellt werden. Es ist in diesem Zusammenhang auch möglich, den Hartmetall-Sinterrohling bereits mit einer Form zu extrudieren, der der Querschnittsform des Schneidteils im Gebrauchszustand unter Berücksichtigung eines bestimmten Bearbeitungsausmaßes, das sich im Millimeterbereich bewegen kann, im Wesentlichen entspricht.

Eine vorteilhafte Weiterbildung des Verfahrens ist Gegenstand des Anspruchs 11. Mit diesem Verfahren gelingt es, den Spanraum des Bohrwerkzeugs an das betreffende Einsatzgebiet des Werkzeugs optimal anzupassen, beispielsweise den Spanraum an den Stellen zu vergrößern, an denen das Bohrwerkzeug in das Werkstück eintaucht bzw. von einer Führungshülse umgeben ist, wenn das Werkzeug als Tieflochbohrwerkzeug verwendet wird.

Vorteilhafte Ausgestaltungen der Erfindung sind Gegenstand der Unteransprüche.

Wenn das Werkzeug mit einer Ausspitzung versehen wird, wird der Span zum Bohrerzentrum hin verlängert, so dass der oben beschriebene, durch die erfindungsgemäße Gestaltung der Spannut begründete, vorteilhafte Spanbildungsprozess auf ein größeres Zerspanungsvolumen ausgedehnt werden kann. Es wird somit in vorteilhafter Weise und zuverlässig vermieden, dass nahe des Zentrums des Bohrwerkzeugs längere Späne entstehen, die zu einem Spanstau und letztlich zu einem Gewaltbruch des Bohrwerkzeugs führen können.

Es hat sich gezeigt, dass durch die Umgestaltung des Bohrerprofils, d.h. durch die Neugestaltung der Spannut im Bereich der Spanbildungszone auch eine Verringerung des Kemquerschnitts des Bohrwerkzeugs zumindest in diesem Bereich möglich wird. Diese Verringerung des Kemquerschnitts ist insbesondere deshalb möglich, weil das Werkzeug aus Vollhartmetall besteht. Die bei der Verringerung des Kemquerschnitts sich zwangsläufig ergebenden kleinen Krümmungsradien der Spannut im Bereich des ersten Spannutenabschnitts können selbst bei der Bearbeitung von extrem harten und zähen Werkstoffen, wie z. B. bei der Bearbeitung von Titan, in Kauf genommen werden, da das Hartmetall den aufgrund der Spankrümmung erhöhten Abriebskräften ohne weiteres gewachsen ist Verbessert kann die Standzeit selbstverständlich dadurch werden, dass die Bohrerspitze mit einer geeigneten Beschichtung, beispielsweise einer Hartstoffschicht, einer Weichstoffschicht oder aber einer kombinierten Hart- und Weichschicht ausgestattet wird.

Besonders gute Ergebnisse lassen sich mit kleinsten Krümmungsradien des ersten Spannutenabschnitts gemäß Anspruch 4 erzielen, wobei der betreffende optimale kleinste Krümmungsradius in Abhängigkeit vom zu zerspanenden Material bzw. von der verwendeten Qualität des für das Werkzeug verwendeten Vollhartmetalls, d. h. der physikalischen Parameter des Vollhartmetalls, gewählt wird.

Wie eingangs bereits erwähnt, führt die erfindungsgemäße Gestaltung des Bohrwerkzeugs zu einer extremen Spankrümmung und somit zu einem frühen Spanbruch, selbst wenn bruchfeste und zähe Werkstoffe, wie z. B. Titan oder Verbundwerkstoffe mit Titanschichten bearbeitet werden. Grundsätzlich kann die Querschnittsform bzw. Spannutenform über die gesamte Länge des Schneidteils beibehalten werden. Eine weitere Verbesserung des Spanabtransports kann allerdings mit der Weiterbildung des Anspruchs 4 erzielt werden.

Die erfindungsgemäßen Effekte lassen sich dann erzielen, wenn die besondere Gestaltung des Bohrerquerschnitts zumindest in der Spanbildungszone eingehalten wird.

Die erfindungsgemäße Gestaltung des Bohrwerkzeugs hat besondere Vorteile dann, wenn das Werkzeug mit einer innenliegenden Kühl-/Schmiermittelversorgung ausgestattet wird und wenn gegebenenfalls die Zerspanung mit einer Minimalmengenschmierung (MMS-Technologie) durchgeführt wird. Der Kühlmittetstrom kann in diesem Fall wirksam zur Verbesserung des Späne-Abtransports genutzt werden.

In Werkstücke der eingangs beschriebenen Art müssen oftmals verhältnismäßig tiefe Löcher mit einer Bohrtiefe von größer 10 x D (wobei D der Nenndurchmesser der Bohrung ist) eingebracht werden. In diesem Fall werden die Bohrwerkzeuge oftmals mittels einer Führungsbuchse am Werkstück zusätzlich positioniert. Insbesondere dann, wenn ein solches Einsatzgebiet des Werkzeugs angestrebt ist, ist es von Vorteil, den Kernquerschnitt des Bohrwerkzeugs gemäß Anspruch 7 auszugestalten. In diesem Fall erhalten die Späne in den entscheidenden Bereichen einen zusätzlichen Freiraum, durch den sie - gegebenenfalls unterstützt durch den Kühl-/Schmiermittelstrom, der verhältnismäßig hohe Strömungsgeschwindigkeiten in der Spannut hat - wirksam und schnell und vor allen Dingen ohne die Gefahr von Spänestau aus dem Bohrloch abtransportiert werden können.

Vorteilhafte Weiterbildungen sind Gegenstand der übrigen Unteransprüche.

Nachstehend wird anhand schematischer Zeichnungen ein Ausführungsbeispiel der Erfindung näher erläutert. Es zeigen:
Fig. 1 eine schematische Seitenansicht eines erfindungsgemäßen Bohrwerkzeugs;
Fig. 1A in etwas vergrößerter Darstellung die Draufsicht des Bohrwerkzeugs gemäß Fig. 1 bei einer Blickrichtung "IA" gemäß Fig. 1;
Fig. 2 in vergrößerter Darstellung eine perspektivische Schrägansicht der Spitze des Bohrwerkzeugs gemäß Fig. 1;
Fig. 3 in einer der Fig. 2 entsprechenden Ansicht die Darstellung der Entstehung des Spans, wenn das Werkzeug gemäß Fign. 1 und 2 in das Werkstück eintaucht;
Fig. 4 in stark vergrößertem Maßstab den Querschnitt des Bohrwerkzeugs im Bereich der Spanbildungszone, d.h. im Bereich einer der Bohrerspitze nahen Querschnittsebene, beispielsweise bei einer Schnittführung gemäß IV-IV in Fig. 1;
Fig. 5 eine schematische Darstellung der Späne, wie sie beim Bohren mit herkömmlichen Werkzeugen in schwer zu zerspanende Werkstücke aufgetreten sind; und
Fig. 6 eine schematische Darstellung der Bohrspäne, wie sie mit der erfindungsgemäßen Gestaltung des Bohrwerkzeugs erzielbar sind.

Das in den Figuren dargestellte Werkzeug besteht aus Vollhartmetall, und zwar vorzugsweise aus einem Hartmetall mit feiner Körnung. Hartmetallsorten dieser Art sind hinlänglich bekannt, so dass auf eine nähere Beschreibung des Werkstoffs verzichtet werden kann. Entscheidend ist, dass das Hartmetall im gesinterten Zustand eine hohe Zähigkeit aufweisen soll und aufgrund der Feinkörnigkeit die Möglichkeit bieten soll, stabile und feine Schneidkanten auszubilden.

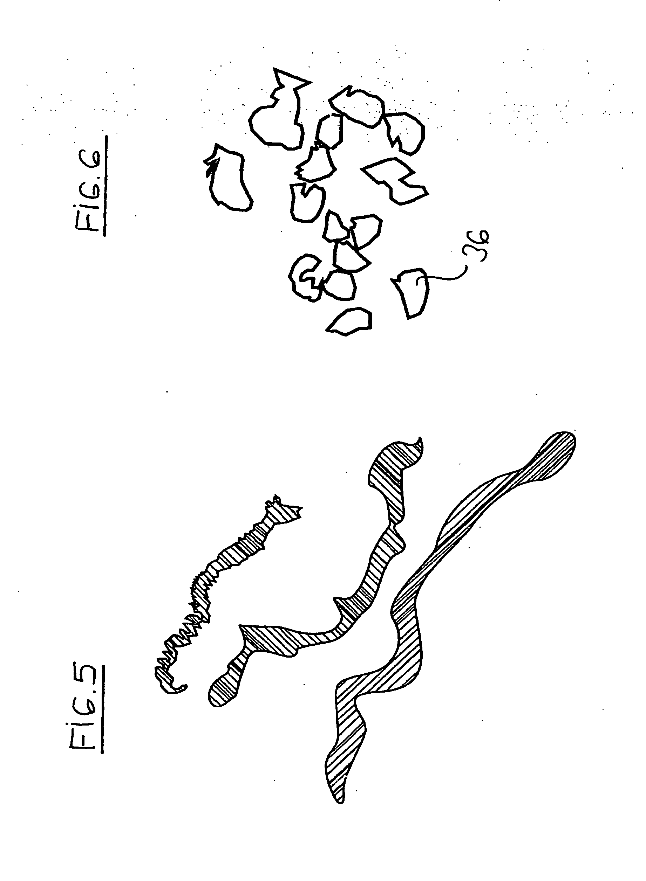

Das Werkzeug dient in besonderem Maße zur Zerspanung von hoch festen Sandwich-Materialien, und zwar insbesondere zum Bohren ins Volle derartiger Materialien, die in der Regel einen Verbundaufbau mit sich abwechselnden Schichten von kohlefaserverstärktem Kunststoff (CFK), Aluminium und Titan haben, wobei die Reihenfolge der Schichten je nach Verwendungszweck unterschiedlich sein kann. Diese Schichten erfordern beim Einbringen von Löchern, insbesondere von tiefen Löchern, bei denen die Lochtiefe ein Mehrfaches des Nenndurchmessers des herzustellenden Bohrlochs beträgt, extrem scharfe Schneidkanten einerseits, aber auch einen zuverlässigen Abtransport der entstehenden Späne. Insbesondere bei den eingangs beschriebenen hoch festen Sandwich-Verbundmaterialien, die titanhaltige Werkstoffschichten enthalten, hat sich bei Verwendung gewöhnlicher Vollhartmetallwerkzeuge herausgestellt, dass sich Späne in den Spannuten stauen und so genannte "Zierharmonika-Späne" entstehen, wie sie beispielsweise in Fig. 5 angedeutet sind. Derartige Späne können selbst dann nicht mehr wirksam und vollständig aus den Spannuten abtransportiert werden, wenn mit sehr hohen Kühl-/Schmiermitteldrücken einer innenliegenden Kühl-/Schmierrnittetversorgung gearbeitet wird, wie sie die bei der so genannten Minimal- oder Mindermengenschmierung (MMS-Technologie) zur Anwendung kommen. Letztlich führt ein derartiger Spänestau zu einem frühzeitigen Gewaltbruch des Bohrwerkzeugs, was mit erheblichen wirtschaftlichen Konsequenzen verbunden ist.

Das erfindungsgemäße Bohrwerkzeug hat demgegenüber einen neuartigen Aufbau, der im Folgenden beschrieben wird.

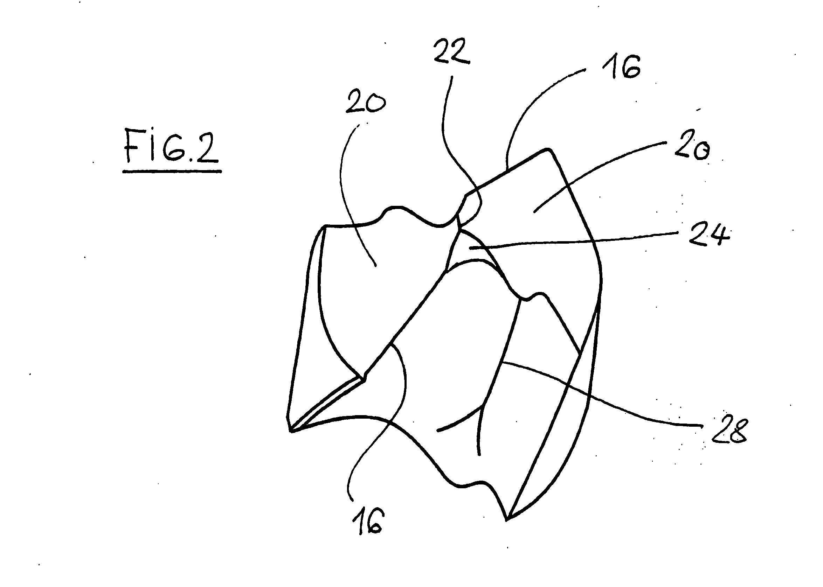

Das mit dem Bezugszeichen 10 bezeichnete Werkzeug mit innenliegenden Kühlkanälen 40 hat einen Schaftabschnitt 12 und ein sich daran anschließendes Schneidteil 14, in das eine der Anzahl der Hauptschneiden 16 entsprechende Anzahl von Spannuten 18 eingearbeitet ist. Da das Werkzeug aus Vollhartmetall besteht, sind diese Nuten 18 in der Regel in einen zylindrischen Vollhartmetall-Rohling eingeschliffen, der oftmals mit innenliegenden Kühlkanälen ausgestattet ist. Die Bohrerspitze, die in vergrößertem Maßstab in Fig. 2 perspektivisch dargestellt ist, hat einen herkömmlichen Spitzenanschliff mit Hauptfreiflächen 20 und einer Querschneide 22. Der Spitzenanschliff selbst, d.h. die Ausbildung der Hauptfreiflächen, kann nach allen gängigen Methoden angebracht und gestaltet werden, so dass eine nähere Beschreibung der Geometrie dieser Flächen hier nicht erforderlich ist.

Die Querschneide 22 ist bei der gezeigten Ausführungsform des Werkzeugs durch Einschleifen einer Ausspitzung 24 verkürzt. Bei der gezeigten Ausführuhgsform nach Fig. 2 ist eine Ausspitzung nach DIN 1412 Form A dargestellt. Es ist jedoch gleichermaßen möglich, andere Ausspitzungen vorzusehen, beispielsweise Ausspitzungen, mit denen gleichzeitig eine Korrektur der Hauptschneide 16 vorgenommen wird.

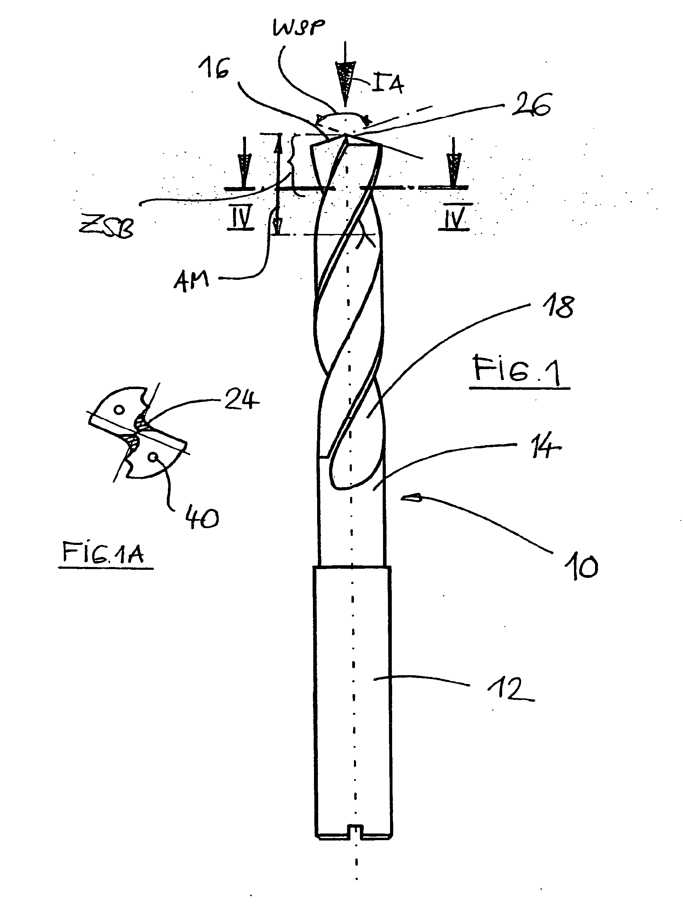

Die Besonderheit des in den Figuren dargestellten Werkzeugs besteht darin, dass im Bereich der in Fig. 2 dargestellten Spanbildungszone, d.h. in dem Bereich, in dem an der Hauptschneide ein zusammenhängender Span entsteht und auf der Spannut abgleitet, eine besondere Gestaltung des Bohrerquerschnitts vorgesehen ist. Die Spanbildungszone kann - je nach zu zerspanendem Material und nach Verlauf der Hauptschneide, insbesondere nach Wahl des von den Hauptschneiden 16 des Bohrwerkzeugs eingeschlossenen Spitzenwinkels WSP (siehe Fig. 1) - variieren. In der Regel ist die Spanbildung in einem Abstand AM von der Bohrerspitze 26 abgeschlossen, wobei das Maß AM zwischen 2 und 5 x D liegt, wenn D den Nenndurchmesser des Bohrwerkzeugs bezeichnet.

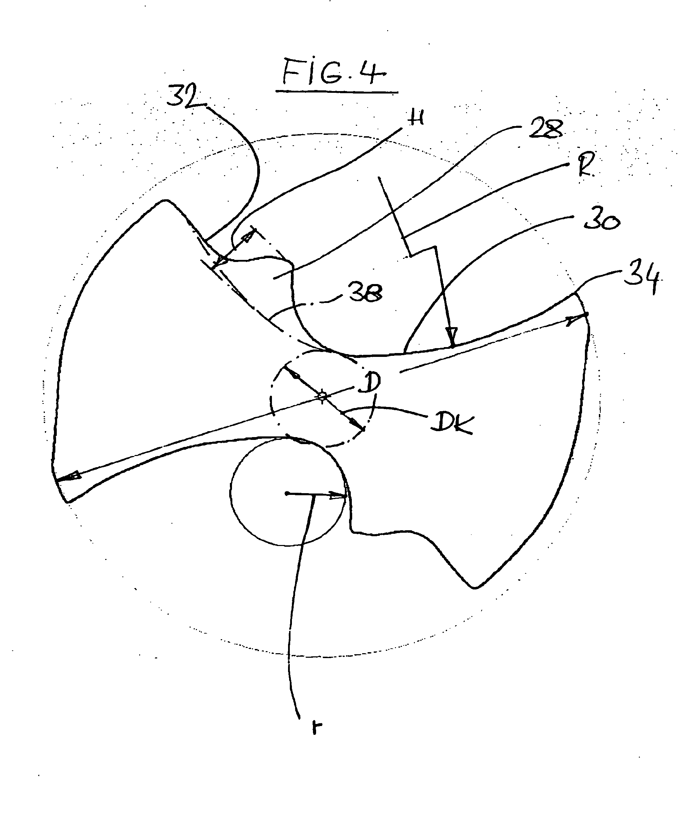

In dieser Spanbildungszone hat das Bohrwerkzeug einen Querschnitt, wie er in Fig. 4 in vergrößertem Maßstab dargestellt ist. Man erkennt, dass das Bohrwerkzeug in diesem Bereich eine in zwei Abschnitte unterteilte Spannut hat. Aus einer ansonsten durchgehenden, in Fig. 4 oben mit strichpunktierter Linie angedeuteten Spannutoberfläche springt ein im Querschnitt im Wesentlichen wellenförmiger Spannutensteg 28 vor. Dieser Spannutensteg unterteilt somit in diesem Bereich die Spannut in zwei Abschnitte, nämlich einen die Schneidbrust bildenden ersten Spannutenabschnitt 30 und einen den Spannutauslauf bildenden zweiten Spannutenabschnitt 32. Die mit H bezeichnete Höhe des Spannutenstegs 28 richtet sich nach der Krümmung des ersten Spannutenabschnitts 30 und sie liegt vorzugsweise im Bereich zwischen 0,05 und 0,15 x D, wobei als zusätzlicher Parameter für die Auswahl des Maßes H der Kernquerschnitt des Bohrwerkzeugs im Bereich der Spanbildungszone eingeht. Dieser Durchmesser ist in Fig. 4 mit dem Bezugszeichen DK bezeichnet und er liegt im Bereich zwischen 0,15 und 0,25 x D, vorzugsweise zwischen 0,16 und 0,2 x D.

Man erkennt aus der Darstellung gemäß Fig: 4, dass im Querschnitt betrachtet der Krümmungsradius R des ersten Spannutenabschnitts 30 mit zunehmendem Abstand zum Schneideneck 34 stetig abnimmt, bis er im Nutgrund den kleinsten Krümmungsradius r vor dem Spannutensteg 28 ausbildet. Dieser kleinste Krümmungsradius r liegt vorzugsweise im Bereich zwischen 0,15 und 0,25 x D, vorzugsweise zwischen 0,18 und 0,22 x D, wobei das Maß wiederum den Nenndurchmesser des Bohrwerkzeugs bezeichnet.

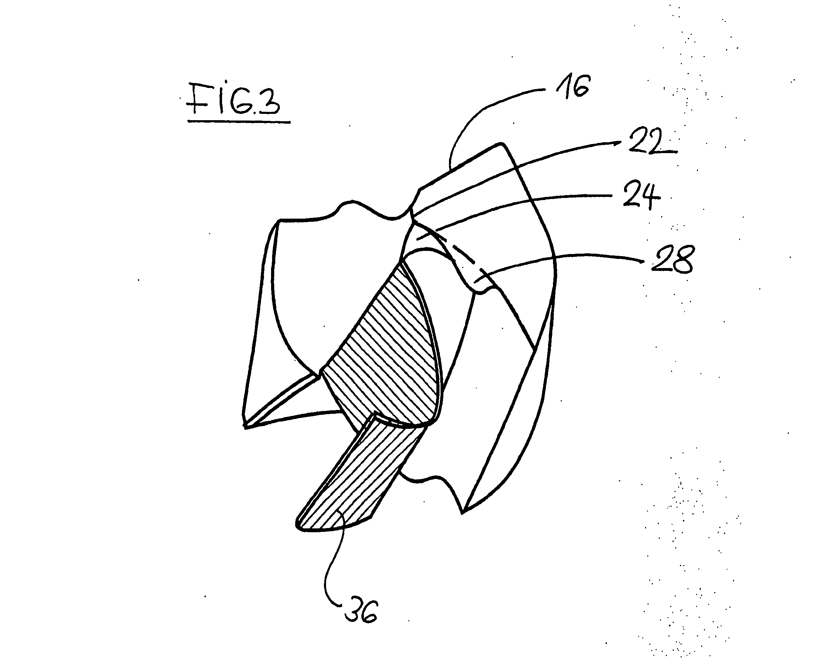

Mit dem vorstehend beschriebenen Aufbau des mehrschneidigen Vollhartmetall-Bohrwerkzeugs ergibt sich bei der Zerspanung folgender Effekt, der anhand der Fig. 3 näher erläutert werden soll. In Fig. 3 ist mit dem Bezugszeichen 36 der an der Hauptschneide 16 entstehende Span bezeichnet.

Bei der schematisierten Darstellung gemäß Fig. 3 entspricht die Breite des Spans der Länge der Hauptschneide 16. Es soll jedoch hervorgehoben werden, dass der Span - je nach Gestaltung der Ausspitzung 24 - auch bis zur verkürzten Querschneide 22 reichen kann. Entscheidend ist, dass der entstehende Span 36 durch die besondere Gestaltung des ersten Spannutenabschnitts 30, d.h. durch das Vorsehen des wellenförmigen Spannutenstegs 28 eine stark verstärkte Krümmung erfährt, die zu einem frühzeitigen Spänebruch, d.h. zur Erzeugung von so genannten Brökelspänen, führt, die in Fig. 6 schematisch dargestellt sind. Dieser Spanbruch tritt selbst dann ein, wenn extrem zähe und feste Werkstoffe, wie z. B. Titan zerspant wird, welches beispielsweise in einer Verbundstruktur von Flugzeug-Sandwich-Materialien auftritt.

Der vom Span 36 auf den Spannutensteg 28 einwirkende Spandruck ist selbstverständlich bei der erfindungsgemäßen Gestaltung des Bohrwerkzeugs größer. Durch die Materialwahl, d.h. dadurch, dass das Werkzeug aus Vollhartmetall hergestellt wird, kann diese verstärkte Beanspruchung des Materials ohne weiteres aufgefangen werden. Gegebenenfalls wird das Bohrwerkzeug in diesem Bereich mit einer geeigneten Beschichtung ausgestattet, wie sie im Stand der Technik vielfach bekannt ist. In diesem Zusammenhang wird beispielsweise auf Beschichtungen verwiesen, die beispielsweise im Werkzeugkatalog der Anmelderin (Gühring - Wer Bietet Mehr?: "The Tool Company", Ausgabe Deutsch 2006, Preisliste Nr. 40) im Einzelnen beschrieben sind. Derartige Beschichtungen dienen zur Reibuhgsverminderung und/oder zur Verschleißminderung. Es kann eine Hartstoffschicht, wie z. B. eine Schicht aus Diamant, vorzugsweise nanokristallinem Diamant, aus TiN oder aus (Ti, Al) N oder aber auch eine Mehrlagen-Schicht verwendet werden. Auch eine Kombination aus Hartstoffschicht und Weichschicht ist - je nach Bedarf und in Abhängigkeit von dem zu zerspanenden Material - anwendbar. Die Schicht richtet sich auch nach der jeweils verwendeten Hartmetallsorte und kann vom Fachmann unter Heranziehung der veröffentlichten Kataloge ausgewählt werden.

Ab einem Mindestabstand AM von der Bohrerspitze 26 ist der Spannutensteg 28 nicht mehr erforderlich. In diesem Bereich (siehe Fig. 1 und Fig. 2) läuft der Spannutensteg 28 allmählich in den Nutgrund 38 aus, der in Fig. 4 mit strichpunktierter Linie bereits angedeutet ist. Der Kernquerschnitt im Bereich der Spannut außerhalb der Spanbildungszone kann unverändert beibehalten werden, oder aber sogar kleiner werden, um den Abtransport der Späne 36 zu verbessern, was insbesondere durch das durch die innenliegenden Kühlkanäle zugeführte Kühl-/Schmiermittel, besonders bei Anwendung der MMS-Technologie, unterstützt werden kann. Insbesondere dann, wenn das Werkzeug zum Einbringen tiefer Löcher mit einer Bohrtiefe größer 10 x D eingesetzt wird, kann es von Vorteil sein, die Spannutentiefe in den Bereichen, in denen das Werkzeug in das Material eintaucht, zu vergrößern. Diese Vergrößerung der Spannutentiefe kann auf den Bereich ausgedehnt werden, der bei Verwendung des Werkzeugs als Tieflochbohrwerkzeug außerhalb des Werkstücks in einer Führungsbuchse geführt bleibt. Zur Erhöhung der Stabilität des Werkzeugs kann die Spannutentiefe außerhalb dieser von Räumen umschlossenen Bereiche allmählich oder sprunghaft ansteigen.

Bei der Herstellung des vorstehend beschriebenen Bohrwerkzeugs geht man vorteilhafter Weise so vor, dass das in Fig. 4 gezeigte Spannutenprofil entweder mit einer einzigen Profil-Schleifscheibe durchgehend eingeschliffen wird oder aber das mehrere Profil-Schleifscheiben verwendet werden, die hintereinander zur Ausbildung des in Fig. 4 gezeigten Profils nacheinander benutzt werden. Anschließend können die Spannutenstege 28 im Bereich außerhalb des in Fig. 1 mit dem Maß AM bezeichneten Bereich weggesehliffen werden. Es ist auch denkbar, das Spannutenprofil gemäß Fig. 4 mit entsprechendem Übermaß bereits zusammen mit dem Vollhartmetallrohling zu extrudieren, um Material einzusparen und das Zerspanungsvolumen zu minimierten.

Selbstverständlich sind Abweichungen von dem beschriebenen Ausführungsbeispiel denkbar, ohne den Rahmen der Erfindung zu verlassen.

So kann beispielsweise das Vollhartmetallbohrwerkzeug mehrteilig aufgebaut sein, wobei ein die Bohrerspitze ausbildendes Vollhartmetall-Teil mit dem oben beschriebenen Aufbau auf ein anderes Teil aufgesetzt wird, das aus einem anderen Material besteht.

Das Bohrwerkzeug kann auch mit innenliegenden Kühlkanälen ausgestattet werden. Anstelle der in den Ausführungsformen gezeigten wendelförmigen Spannuten können auch geradlinige Nuten verwendet werden.

Das Werkzeug kann auch mit mehr als zwei Schneiden ausgebildet werden, wobei dann jede Spannut einen vorstehend beschriebenen Spannutensteg im Bereich einer Spanbildungszone aufweist.

Die Erfindung schafft somit ein mehrschneidiges Vollhartmetall- (VHM) Bohrwerkzeug zur Zerspanung von hoch festen Sandwich-Materialien. Das Werkzeug hat einen Schaftabschnitt und ein sich daran anschließendes Schneidteil, in das eine der Anzahl der Hauptschneiden entsprechende Anzahl von Spannuten eingearbeitet ist. Zur Verstärkung der Krümmung des entstehenden Spans hat die Spannut des Bohrwerkzeugs im Bereich einer Spanbildungszone einen aus der Spannutenoberfläche vorspringenden und im Querschnitt im Wesentlichen wellenförmigen Spannutensteg, der die Spannut in zwei Abschnitte, einen die Schneidbrust bildenden ersten Spannutenabschnitt und einen den Spannutauslauf bildenden zweiten Spannutenabschnitt unterteilt.

## Patentansprüche

1. Vollhartmetall(VHM)-Bohrwerkzeug, insbesondere mehrschneidiges Vollhartmetall(VHM)-Bohrwerkzeug zur Zerspanung von hochfesten Sandwich-Materialien, insbesondere zum Bohren ins Volle von derartigen Werkstoffen mit einem Verbundaufbau, bei dem sich Werkstofflagen mit überwiegendem Anteil von CFK und/oder Aluminium mit Titanlagen abwechseln, mit einem Schaftabschnitt (12) und einem sich daran anschließenden Schneidteil (14), in das eine der Anzahl der Hauptschneiden entsprechende Anzahl von Spannuten (18) eingearbeitet ist und eine mit einem Spitzenanschliff (20, 24) versehene Bohrerspitze hat, wobei zur Verstärkung der Krümmung des entstehenden Spans (36) die jeweilige Spannut (18) des Bohrwerkzeugs in einem Bereich, in dem an der Hauptschneide ein zusammenhängender Span entsteht und auf der Spannut abgleitet, einer Spanbildungszone (ZSB), einen aus der Spannutoberfläche (38) vorspringenden, im Querschnitt im Wesentlichen wellenförmigen Spannutensteg (28) aufweist, durch den die Spannut in zwei Abschnitte, einen die Schneidbrust bildenden ersten Spannutenabschnitt (30) und einen den Spannutauslauf bildenden zweiten Spannutenabschnitt (32) unterteilt ist, **dadurch gekennzeichnet, dass** der Spannutensteg (28) außerhalb der Spanbildungszone (ZSB) in den Nutengrund (38) ausläuft, wobei die Spanbildung in der Regel in einem Mindestabstand (AM) von der Bohrerspitze (26) abgeschlossen ist, wobei der Mindestabstand (AM) im Bereich zwischen 2 und 5 x D, vorzugsweise zwischen 2 und 3 x D liegt, wobei D dem Nenndurchmesser des Bohrwerkzeugs (10) entspricht.

2. Bohrwerkzeug nach Anspruch 1, **dadurch gekennzeichnet, dass** die Bohrerspitze eine Ausspitzung (24) aufweist.

3. Bohrwerkzeug nach Anspruch 1 oder 2, **dadurch gekennzeichnet, dass** der Kernquerschnitt (DK) des Bohrwerkzeugs zumindest in der Spanbildungszone (ZSB) im Bereich zwischen 0,15 und 0,25 x D, vorzugsweise zwischen 0,16 und 0,20 x D liegt, wobei D dem Nenndurchmesser des Bohrwerkzeugs (10) entspricht.

4. Bohrwerkzeug nach einem der Ansprüche 1 bis 3, **dadurch gekennzeichnet, dass** im Querschnitt betrachtet der kleinste Krümmungsradius (r) des ersten Spannutenabschnitts (30) vor dem Spannutensteg (28) im Bereich zwischen 0,15 und 0,25 x D, vorzugsweise zwischen 0,18 und 0,22 x D liegt, wobei D dem Nenndurchmesser des Bohrwerkzeugs (10) entspricht.

5. Bohrwerkzeug nach einem der Ansprüche 1 bis 4, **dadurch gekennzeichnet, dass** der Spannutensteg (28) außerhalb der Spanbildungszone (ZSB) allmählich in den Nutgrund (38) ausläuft.

6. Bohrwerkzeug nach einem der Ansprüche 1 bis 5, **dadurch gekennzeichnet, dass** bei Verwendung des Bohrwerkzeugs zum Bohren tiefer Bohrungen der Kernquerschnitt (DK) des Bohrwerkzeugs (10) im Anschluss an die Spanbildungszone (ZSB) in dem Bereich, der beim Bohren entweder von der Bohrungswand oder einer Führungsbuchse abgedeckt bleibt, weiter reduziert ist.

7. Bohrwerkzeug nach einem der Ansprüche 1 bis 6, **dadurch gekennzeichnet, dass** im Querschnitt betrachtet der Krümmungsradius (R) des ersten Spannutenabschnitts (30) mit zunehmendem Abstand zum Schneideneck (34) stetig abnimmt.

8. Verfahren zur Herstellung eines Bohrwerkzeugs nach einem der Ansprüche 1 bis 7, bei dem in einen Vollhartmetall(VHM)-Rohling Spannuten mittels einer Profil-Schleifscheibe eingeschliffen werden, **dadurch gekennzeichnet, dass** zunächst über das gesamte Schneidteil (14) hinweg die Spannuten mit erstem und zweitem Spannutenabschnitt (30, 32) und dazwischen liegendem Steg (28), gegebenenfalls mit sich in axialer Richtung ändernder Spannutentiefe eingebracht werden, und dass anschließend die Spannutenstege (28) außerhalb der Spanbildungszone (ZSB) zur Vereinigung der beiden Spannutenabschnitte (30, 32) zu einer durchgehenden Spannut (18) weggeschliffen werden.

9. Verfahren nach Anspruch 8, **dadurch gekennzeichnet, dass** die ersten und zweiten Spannutenabschnitte (30, 32) und der dazwischenliegende Steg (28) mittels einer einzigen Profilschleifscheibe geschliffen werden.

10. Verfahren nach Anspruch 8 oder 9, **dadurch gekennzeichnet, dass** die Eintauchtiefe der zur Herstellung der Spannuten dienenden Profil-Schleifscheiben über die axiale Länge des Bohrwerkzeugs (10) verändert wird.

## Claims

1. A solid carbide drilling tool, in particular a multi-edge solid carbide drilling tool for machining high-strength sandwich materials, in particular for drilling into solid such materials with a composite structure in which layers of material with a predominant proportion of CRP and/or aluminum alternate with layers of titanium, having a shank portion (12) and an adjoining cutting portion (14), in which a number of chip flutes (18) corresponding to the number of main cutting edges are incorporated and which has a drill tip provided with a point geometry (20, 24), wherein for enhancement of the curvature of the resulting chip (36) the respective chip flute (18) of the drilling tool in an area, in which a continuous chip forms at the main cutting edge and slides along on the chip flute, a chip formation zone (ZSB), has chip flute web (28) protruding from the chip flute surface (38) and essentially undulated in cross section, by which the chip flute is divided in two sections, a first chip flute section (30) forming the rake face and a second chip flute section (32) forming the chip flute outlet, **characterized in that** chip flute web (28) tapers off outside the chip formation zone (ZSB) into the base of the flute (38), wherein the chip formation as a rule is completed at a minimum distance (AM) from the drill tip (26), wherein the minimum distance (AM) is in the range between 2 and 5 x D, preferably between 2 and 3 x D, where D is the nominal diameter of the drilling tool (10).

2. The drilling tool according to claim 1, **characterized in that** the drill tip has a thinning (24).

3. The drilling tool according to claim 1 or 2, **characterized in that** the core cross-section (DK) of the drilling tool at least in the chip formation zone (ZSB) is in the range between 0.15 and0.25 x D, preferably between 0.16 and 0.20 x D, where D is the nominal diameter of the drilling tool (10).

4. The drilling tool according to any one of claims 1 to 3, **characterized in that** viewed in cross-section the smallest radius of curvature (r) of the first chip flute section (30) prior to the chip flute web (28) is in the range between 0.15 and 0.25 x D, preferably between 0.18 and 0.22 x D, where D is the nominal diameter of the drilling tool (10).

5. The drilling tool according to any one of claims 1 to4, **characterized in that** the chip flute web (28) outside of the chip formation zone (ZSB) tapers off gradually into the chip flute base (38).

6. The drilling tool according to any one of claims 1 to 5, **characterized in that** in use of the drilling tool for drilling deep holes the core cross-section (DK) of the drilling tool (10) after the chip formation zone (ZSB) is further reduced in the region which remains covered during drilling either by the bore wall or a guide bushing.

7. The drilling tool according to any one of claims 1 to 6, **characterized in that** viewed in cross section the radius of curvature (R) of the first chip flute section (30) decreases continuously with increasing distance from the cutting corner (34).

8. A method for producing a drilling tool according to any one of claims 1 to 7, wherein in a solid carbide blank flutes are ground by means of a profile grinding wheel, **characterized in that** initially across the whole cutting portion (14) the chip flutes with first and second chip flute sections (30, 32) and intermediate web (28), optionally with in axial direction changing chip flute depth, are introduced, and that subsequently the chip flute webs (28) outside the chip formation zone (ZSB) are ground out for the combination of the two chip flute sections (30, 32) to one continuous chip flute (18).

9. The method according to claim 8, **characterized in that** the first and second chip flute sections (30, 32) and the intermediate web (28) are ground by a single profile grinding wheel.

10. The method according to claim 8 or 9, **characterized in that** the immersion depth of the profile grinding wheels used to produce the chip flutes is changed over the axial length of the drilling tool.

## Revendications

1. Foret en carbure monobloc (VHM), en particulier foret à plusieurs tranchants en carbure monobloc (VHM) pour l'usinage par enlèvement de copeaux de matériaux sandwich hautement résistants, en particulier pour le perçage dans la masse de matériaux du type présentant une structure composite, où des couches de matière avec une part majoritaire de CFK et/ou d'aluminium alternent avec des couches de titane, avec une partie de queue (12) et une partie de coupe (14) adjacente à celle-ci, où sont ménagées des gorges de dégagement (18) en nombre correspondant au nombre de tranchants principaux, et avec une pointe de foret pourvue d'un affûtage (20, 24) de pointe, pour accentuer la courbure du copeau (36) correspondant formé, chaque gorge de dégagement (18) du foret présentant dans une partie d'une zone de formation de copeau (ZSB) où un copeau cohérent est formé contre le tranchant principal et glisse sur la gorge de dégagement, une nervure (28) de gorge saillant de la surface de la zone (38) de dégagement et de section sensiblement ondulée, par laquelle la gorge de dégagement est subdivisée en deux segments, un premier segment (30) de gorge de dégagement formant la face de dépouille et un deuxième segment (32) de gorge de dégagement formant la sortie de la gorge de dégagement, **caractérisé en ce que** la nervure (28) de gorge sort dans le fond (38) de la gorge à l'extérieur de la zone de formation de copeau (ZSB), la formation de copeau étant généralement terminée à une distance minimale (AM) de la pointe (26) du foret, ladite distance minimale (AM) étant comprise entre 2 et 5 x D, préférentiellement entre 2 et 3 x D, D correspondant au diamètre nominal du foret (10).

2. Foret selon la revendication 1, **caractérisé en ce que** la pointe du foret présente un amincissement de l'âme (24).

3. Foret selon la revendication 1 ou 2, **caractérisé en ce qu'**au moins dans la zone de formation de copeau (ZSB), la section d'âme (DK) du foret est comprise entre 0,15 et 0,25 x D, préférentiellement entre 0,16 et 0,20 x D, D correspondant au diamètre nominal du foret (10).

4. Foret selon l'une des revendications 1 à 3, **caractérisé en ce que**, vu en section transversale, le rayon de courbure (r) minimal du premier segment (30) de gorge de dégagement avant la nervure (28) de gorge est compris entre 0,15 et 0,25 x D, préférentiellement entre 0,18 et 0,22 x D, D correspondant au diamètre nominal du foret (10).

5. Foret selon l'une des revendications 1 à 4, **caractérisé en ce que** la nervure (28) de gorge sort graduellement dans le fond (38) de la gorge à l'extérieur de la zone de formation de copeau (ZSB).

6. Foret selon l'une des revendications 1 à 5, **caractérisé en ce qu'**en cas d'utilisation du foret pour le perçage de trous profonds, la section d'âme (DK) du foret (10) continue à s'amincir après la zone de formation de copeau (ZSB), dans la zone restant couverte pendant le perçage, soit par la paroi de perçage, soit par un canon de guidage.

7. Foret selon l'une des revendications 1 à 6, **caractérisé en ce que**, vu en section transversale, le rayon de courbure (R) du premier segment (30) de gorge de dégagement diminue de manière continue à mesure que la distance à l'arête (34) de tranchant augmente.

8. Procédé de fabrication d'un foret selon l'une des revendications 1 à 7, où, dans une ébauche en carbure monobloc (VHM), des gorges de dégagement sont rainurées au moyen d'une meule à profiler, **caractérisé en ce que** les gorges de dégagement sont d'abord ménagées sur toute la partie de coupe (14), avec le premier et le deuxième segments (30, 32) de gorge de dégagement, et avec la nervure (28) intercalée, éventuellement avec une profondeur de gorges de dégagement variable dans la direction axiale, et **en ce que** les nervures (28) de gorge à l'extérieur de la zone de formation de copeau (ZSB) sont ensuite supprimées par rectification pour réunir les deux segments (30, 32) de gorge de dégagement et former une gorge de dégagement (18) continue.

9. Procédé selon la revendication 8, **caractérisé en ce que** les premier et deuxième segments (30, 32) de gorge de dégagement et la nervure (28) intercalée sont rectifiés par une seule meule à profiler.

10. Procédé selon la revendication 8 ou 9, **caractérisé en ce que** la profondeur de plongée des meules à profiler servant à la réalisation des gorges de dégagement est modifiée sur la longueur axiale du foret (10).
